# EUROPÄISCHE PATENTSCHRIFT

(11) **EP 3 173 884 B1**
(45) Veröffentlichungstag und Bekanntmachung des Hinweises auf die Patenterteilung: **08.01.2020**
(21) Anmeldenummer: 16197755.8
(22) Anmeldetag: 08.11.2016
(51) Int. Cl.: G05B 19/042

(54) **VERFAHREN ZUM PROGRAMMIEREN EINER SICHERHEITSSTEUERUNG**
METHOD FOR PROGRAMMING A SAFETY DEVICE
PROCÉDÉ DE PROGRAMMATION D'UNE COMMANDE DE SÉCURITÉ

(30) Priorität: 24.11.2015 DE 102015120314
(43) Veröffentlichungstag der Anmeldung: 31.05.2017
(73) Patentinhaber: Pilz GmbH & Co. KG, 73760 Ostfildern (DE)
(72) Erfinder: Wöhrle, Stefan, 73760 Ostfildern (DE); von Haugwitz, Frank, 73760 Ostfildern (DE); Bauer, Ralf, 73760 Ostfildern (DE)
(74) Vertreter: Witte, Weller & Partner Patentanwälte mbB

(56) Entgegenhaltungen:
- EP-A2- 1 515 205
- DE-A1-102008 060 003
- DE-A1-102009 011 679
- US-A- 5 970 243
- US-A1- 2010 192 122
- US-A1- 2012 078 392

## Beschreibung

Die vorliegende Erfindung betrifft ein Verfahren zum Programmieren einer Sicherheitssteuerung, die eine Vielzahl von Eingängen zum Aufnehmen von Sensorsignalen, eine Vielzahl von Ausgängen zum Ausgeben von Aktorsignalen und zumindest einen Prozessor zum Ausführen von Programmcode aufweist, mit den Schritten:
- Erstellen eines Anwenderprogramms, das logische Abhängigkeiten zwischen den Sensorsignalen und Aktorsignalen definiert, unter Verwendung eines Programmeditors, wobei das Anwenderprogramm einen ersten Programmteil und zumindest einen weiteren Programmteil aufweist, und wobei der erste Programmteil sicherheitsrelevante logische Abhängigkeiten zwischen ausgewählten Sensorsignalen und Aktorsignalen definiert,
- Kompilieren und Binden des ersten und des zumindest einen weiteren Programmteils, um einen ausführbaren originären Programmcode für den zumindest einen Prozessor zu erhalten, wobei der originäre Programmcode einen originären ersten Codeteil aufweist, der den ersten Programmteil repräsentiert, und zumindest einen originären weiteren Codeteil, der den zumindest einen weiteren Programmteil repräsentiert,
- Übertragen des originären Programmcodes in einen ersten Speicher der Sicherheitssteuerung,
- Ausführen des originären Programmcodes mit Hilfe des zumindest einen Prozessors, um die Aktorsignale in Abhängigkeit von den Sensorsignalen zu erzeugen,
- Ändern des ersten Programmteils unter Verwendung des Programmeditors, um einen geänderten ersten Programmteil zu erhalten, und
- Kompilieren des geänderten ersten Programmteils, um einen geänderten ersten Codeteil zu erhalten.

Die Erfindung betrifft ferner eine Sicherheitssteuerung zum fehlersicheren Steuern eines sicherheitskritischen Prozesses, mit einem Programmiertool, das einen Programmeditor, einen Compiler und eine Schnittstelle zum Übertragen eines originären Programmcodes in einen ersten Speicher der Sicherheitssteuerung entsprechend dem zuvor genannten Verfahren aufweist.

Eine Sicherheitssteuerung, die sich mit einem solchen Verfahren programmieren lässt, wird von der Pilz GmbH & Co. KG, Felix-Wankel-Straße 2, 72760 Ostfildern, Deutschland unter der Bezeichnung Automatisierungssystem PSS 4000 angeboten und ist beispielsweise in einer Broschüre mit dem Titel "Automation System PSS 4000 - Building Block System" aus dem Jahr 2015 beschrieben. Des Weiteren offenbaren DE 10 2009 019 096 A1 oder US 2012/0078392 A1 eine solche Sicherheitssteuerung.

Die bekannte Sicherheitssteuerung besteht aus einer Vielzahl von Hardware- und Softwarekomponenten, aus denen ein Anwender ein Automatisierungssystem nach seinen individuellen Bedürfnissen zusammenstellen kann. Je nach Größe der Anwendung kann das System eine Vielzahl an Steuereinheiten beinhalten, die über ein Kommunikationsnetzwerk miteinander verbunden sind und jeweils Teilprozesse innerhalb einer komplexen Anlage steuern. Die vorliegende Erfindung ist allerdings nicht auf ein komplexes System mit einer Vielzahl von vernetzten Steuereinheiten beschränkt und kann gleichermaßen zum Programmieren einer "kleinen" Sicherheitssteuerung verwendet werden, die in kompakter Bauform einige wenige Sicherheitsfunktionen in einer automatisiert betriebenen Anlage oder Maschine steuert.

Des Weiteren ist die vorliegende Erfindung nicht auf eine "reine" Sicherheitssteuerung beschränkt. Sie kann vielmehr auch bei Steuerungen verwendet werden, die sicherheitsrelevante Prozesse (sogenannte FS- bzw. Failsafe-Prozesse) und nicht-sicherheitsrelevante Prozesse (sogenannte Standard-Prozesse) gleichermaßen steuern. Ein nichtsicherheitsrelevanter Standard-Prozess betrifft typischerweise den normalen Betriebsablauf einer automatisierten Anlage. Fehler in der Steuerung dieses Prozesses mögen aus wirtschaftlichen Gründen ärgerlich sein und sollen daher möglichst vermieden werden. Sie gefährden jedoch nicht die Gesundheit oder das Leben von Bedienpersonen oder anderen Personen in der Umgebung der Anlage. Im Unterschied dazu dienen sicherheitsrelevante Steuerfunktionen primär dazu, die Gefahren, die von einer automatisiert betriebenen Anlage ausgehen, zu beherrschen. Aus diesem Grund werden an die Steuerung von sicherheitsrelevanten Prozessen in der Automatisierungstechnik besondere Anforderungen im Hinblick auf die Vermeidung und Beherrschung von Fehlern gestellt. Sicherheitsrelevante Steuerungen und Steuerkomponenten erfordern einen höheren Entwicklungsaufwand und benötigen typischerweise besondere Zulassungen, insbesondere nach den Normen EN ISO 13849, EN/IEC 61508, EN IEC 62061 u.a.

Das Automatisierungssystem PSS 4000 ist einerseits eine Sicherheitssteuerung im Sinne der vorgenannten Normen, da es zahlreiche Komponenten beinhaltet, die die erforderlichen Zulassungen zum Steuern von sicherheitskritischen Prozessen besitzen. Insbesondere erfüllen zahlreiche Komponenten die Anforderungen gemäß SIL 2 und höher nach EN/IEC 61508 und/oder PL d gemäß EN ISO 13849 und höher. Darüber hinaus ist das Automatisierungssystem PSS 4000 jedoch auch dazu ausgelegt, Standard-Prozesse einer komplexen Anlage zu steuern. Die Programmierung der bekannten Sicherheitssteuerung kann daher im Einzelfall sehr aufwendig und umfangreich sein, wenn nämlich innerhalb einer komplexen Anlage eine große Zahl an sicherheitsrelevanten und nicht-sicherheitsrelevanten Prozessen gesteuert werden muss.

Es ist daher typisch für solche Systeme, dass das sogenannte Anwenderprogramm, das die logischen Abhängigkeiten zwischen den Sensorsignalen und Aktorsignalen innerhalb der Anlage definiert, in mehreren Teilen oder Modulen erstellt wird, wobei der Anwender in der Regel eine höhere Programmiersprache verwendet, die auf der internationalen Norm IEC 61131 basiert. Die einzelnen Programmteile werden anschließend zusammen kompiliert, d.h. in einen maschinenlesbaren Code übersetzt, und gebunden. Der erhaltene Programmcode wird dann in alle Steuereinheiten heruntergeladen, die den entsprechenden Programmcode ausführen sollen.

Die Erstellen eines komplexen Anwenderprogramms ist häufig nicht in einem einzigen Schritt möglich. In der Regel ergibt sich nach Inbetriebnahme der Sicherheitssteuerung ein Änderungs- und/oder Ergänzungsbedarf, weil man erst bei laufender Anlage alle Zusammenhänge erkennen kann. Bei der bekannten Sicherheitssteuerung kann der Anwender einen oder mehrere Teile des Anwenderprogramms in der höheren Programmiersprache ändern. Anschließend muss das geänderte Anwenderprogramm erneut kompiliert werden und die kompilierten Teile müssen erneut gebunden werden, um einen maschinenlesbaren Programmcode mit den entsprechenden Änderungen zu erhalten. Der geänderte Programmcode wird dann erneut in die Sicherheitssteuerung geladen und überschreibt den vorherigen (originären) Programmcode. Die Durchführung einer Änderung erfordert daher bei der bekannten Sicherheitssteuerung einen Stopp des Steuerungsablaufs, um das Herunterladen des geänderten Programmcodes zu ermöglichen. Anschließend muss die Anlage neu gestartet werden, was insbesondere bei komplexen Anlagen zeitaufwendig sein kann.

Bei einer früheren Steuerung der Pilz GmbH & Co. KG, die unter der Bezeichnung PSS 3000 angeboten wurde, war es möglich, Standard-Bausteine auch bei laufender Maschine in den Speicher der Steuerung zu übertragen. Dies erleichtert eine nachträgliche Änderung an einem Anwenderprogramm. Allerdings beschränkte sich diese Updatemöglichkeit auf Programmteile, die ausschließlich nicht-sicherheitsrelevante Standard-Prozesse betrafen. Der praktische Nutzen dieser Funktion war daher begrenzt.

Vor diesem Hintergrund ist es eine Aufgabe der vorliegenden Erfindung, ein Verfahren der eingangs genannten Art anzugeben, das eine schnellere Änderung des Programmcodes für die Sicherheitssteuerung ermöglicht. Es ist eine weitere Aufgabe der Erfindung, eine Sicherheitssteuerung anzugeben, die sich mit einem solchen Verfahren einfacher und schneller programmieren lässt.

Gemäß einem ersten Aspekt der Erfindung wird diese Aufgabe durch ein Verfahren der eingangs genannten Art gelöst, wobei der geänderte erste Codeteil in einen zweiten Speicher der Sicherheitssteuerung übertragen wird, während der originäre Programmcode mit Hilfe des zumindest einen Prozessors ausgeführt wird, und wobei der geänderte erste Codeteil anschließend in Ergänzung zu dem originären weiteren Codeteil und anstelle des originären ersten Codeteils mit Hilfe des zumindest einen Prozessors ausgeführt wird, um die Aktorsignale in Abhängigkeit von dem geänderten ersten Programmteil zu erzeugen.

Gemäß einem weiteren Aspekt wird diese Aufgabe durch eine Sicherheitssteuerung der eingangs genannten Art gelöst, wobei das Programmiertool dazu ausgebildet ist, den ersten Programmteil separat von dem weiteren Programmteil zu ändern und zu kompilieren, um einen geänderten ersten Codeteil zu erhalten, und wobei das Programmiertool eine Schnittstelle aufweist, die dazu ausgebildet ist, den geänderten ersten Codeteil in den zweiten Speicher zu übertragen, während der originäre Programmcode mit Hilfe des zumindest einen Prozessors ausgeführt wird, und wobei die Sicherheitssteuerung dazu ausgebildet ist, den geänderten ersten Codeteil in Ergänzung zu dem originären weiteren Codeteil und anstelle des originären ersten Codeteils mit Hilfe des zumindest einen Prozessors auszuführen, um die Aktorsignale in Abhängigkeit von dem geänderten ersten Programmteil zu erzeugen.

Besonders vorteilhaft lassen sich das neue Verfahren und die neue Sicherheitssteuerung mit einem Computerprogramm realisieren, das den vorgenannten Verfahrensablauf ermöglicht, sobald das Computerprogramm auf der Sicherheitssteuerung implementiert ist.

Das neue Verfahren und die entsprechende Sicherheitssteuerung ermöglichen eine Änderung des ersten Programmteils unabhängig von Änderungen in dem zumindest einen weiteren Programmteil sowie ein anschließendes isoliertes Kompilieren des geänderten ersten Programmteils, um auf diese Weise einen geänderten ersten Codeteil zu erzeugen, der als isoliertes Programmcodefragment in den zweiten Speicher der Sicherheitssteuerung geladen wird. Vorzugsweise wird der geänderte erste Codeteil ohne vorheriges Binden mit anderen Codeteilen in den zweiten Speicher geladen. Da der erste Speicher mit dem originären Programmcode hierdurch nicht überschrieben wird, ist das Herunterladen des geänderten ersten Codeteils ohne Weiteres möglich, während der originäre Programmcode mit Hilfe des zumindest einen Prozessors ausgeführt wird. Das Herunterladen des geänderten ersten Codeteils erfordert daher keine Unterbrechung bzw. keinen Stopp des Steuerungsablaufs. Anders ausgedrückt kann der erste Programmteil geändert werden und kann der geänderte erste Codeteil in den zweiten Speicher der Sicherheitssteuerung übertragen werden, während die Sicherheitssteuerung den originären Programmcode ausführt und folglich den - zumindest teilweise - sicherheitskritischen Prozess in der automatisierten Anlage steuert. Das isolierte Kompilieren des geänderten ersten Programmteils und der bevorzugte Verzicht auf das Binden mit dem zumindest einen weiteren Programmteil ermöglicht die schnellere Erzeugung eines maschinenlesbaren geänderten Codeteils. Allein dadurch ist bereits eine schnellere Änderung in der Programmierung der Sicherheitssteuerung möglich.

Darüber hinaus kann der geänderte erste Codeteil von der Sicherheitssteuerung jedoch ausgeführt werden, ohne den Steuerungsablauf zu unterbrechen. Vorteilhaft kann die Sicherheitssteuerung den geänderten ersten Codeteil unter Verwendung der aktuellen Prozesswerte der gesteuerten Anlage ausführen. Dies ermöglicht eine große Zeitersparnis, da die Sicherheitssteuerung und die gesteuerte Anlage vor einem Neustart zunächst in einen definierten Zustand gebracht werden müssen, was bei einer komplexen Anlage sehr zeitaufwendig sein kann. Dies kann aufgrund des neuen Verfahrens entfallen.

Die Übernahme des geänderten ersten Codeteils im laufenden Betrieb der Sicherheitssteuerung ist in einigen vorteilhaften Ausführungsbeispielen dadurch realisiert, dass die Sicherheitssteuerung von dem Programmiertool veranlasst wird, einen Programmzeiger so zu ändern, dass der geänderte erste Codeteil aus dem zweiten Speicher anstelle des originären ersten Codeteils aus dem ersten Speicher ausgeführt wird, sobald innerhalb der zyklischen Ausführung des Programmcodes die Ausführung des ersten Codeteils ansteht. In einigen vorteilhaften Ausführungsbeispielen erfolgt die Änderung des Programmzeigers am Ende eines Programmzyklus, so dass der geänderte erste Codeteil von einem Programmzyklus zum nächsten ausgeführt wird. Die aktuellen Prozesswerte aller Variablen bleiben dabei vorteilhaft erhalten. Prinzipiell wäre es jedoch denkbar, dass der originäre erste Codeteil mit dem geänderten ersten Codeteil überschrieben wird, insbesondere wenn der Programmcode nicht direkt aus dem ersten Speicher ausgeführt wird, sondern beispielsweise aus einem speziellen Arbeitsspeicher.

In allen bevorzugten Ausführungsbeispielen bleiben sämtliche I/O-Zuordnungen zwischen den physischen Eingängen und Ausgängen der Sicherheitssteuerung und den im Programmcode verwendeten Variablen erhalten. Bevorzugt beschränken sich die Änderungen in dem geänderten ersten Codeteil daher allein auf geänderte logische Abhängigkeiten zwischen den ausgewählten Sensorsignalen und Aktorsignalen. Dies erleichtert die schnelle Übernahme des geänderten Codeteils in den Steuerungsablauf.

Da der geänderte erste Codeteil sicherheitsrelevante logische Abhängigkeiten zwischen ausgewählten Sensorsignalen und Aktorsignalen repräsentiert, ermöglichen das neue Verfahren und die neue Sicherheitssteuerung eine Änderung des sicherheitsrelevanten Steuerungsablaufs im laufenden Betrieb der Sicherheitssteuerung. Dies ist einerseits sehr vorteilhaft, weil sicherheitsrelevante Steuerungsanteile die Steuerung des nicht-sicherheitsrelevanten Betriebsablaufs der Anlage erschweren und beeinträchtigen können. Infolgedessen ermöglichen das neue Verfahren und die entsprechende Sicherheitssteuerung beispielsweise eine zeitlich begrenzte Außerkraftsetzung eines sicherheitsrelevanten Steuerungsablaufs, um etwa eine Fehlersuche im nicht-sicherheitsrelevanten Steuerungsablauf zu erleichtern.

In vorteilhaften Ausführungsbeispielen ermöglichen das neue Verfahren und die neue Sicherheitssteuerung darüber hinaus auch eine Änderung in dem zumindest einen weiteren Programmteil während des laufenden Betriebs, indem der zumindest eine weitere Programmteil separat geändert und kompiliert wird und der geänderte weitere Codeteil in den zweiten Speicher übertragen wird. Die Besonderheit des neuen Verfahrens und der neuen Sicherheitssteuerung liegt ungeachtet dessen jedoch darin, dass der erste Programmteil inklusive der sicherheitsrelevanten logischen Abhängigkeiten in der beschriebenen Weise isoliert geändert, kompiliert und in den zweiten Speicher der Sicherheitssteuerung übertragen werden kann. In einigen vorteilhaften Ausführungsbeispielen ist die Änderung des ersten Programmteils und die Übertragung des geänderten ersten Codeteils in den zweiten Speicher der Sicherheitssteuerung daher nur nach einer erfolgreichen Identifizierung und/oder Autorisierung des Anwenders und einer entsprechenden Freigabe durch das Betriebssystem der Sicherheitssteuerung möglich.

Des Weiteren ist es in einigen vorteilhaften Ausführungsbeispielen möglich, die Ausführung des geänderten ersten Codeteils aus dem zweiten Speicher während der Ausführung des originären Programmcodes zu sperren, wobei diese Sperre vorteilhaft bei der Ausführung des originären Programmcodes zweikanalig überwacht wird. Diese Ausführungsbeispiele verhindern somit jeglichen Eingriff in den sicherheitsrelevanten Steuerungsablauf in Abhängigkeit von dem aktuell ausgeführten originären Programmcode, was eine erhöhte Sicherheit bietet, aber die Durchführung von Änderungen im Einzelfall erschwert. Vorteilhaft besitzen das neue Verfahren und die neue Sicherheitssteuerung grundsätzlich die Möglichkeit, einen isoliert kompilierten ersten Codeteil in den zweiten Speicher der Sicherheitssteuerung zu laden und den zumindest einen Prozessor zur Ausführung dieses Codeteils im laufenden Betrieb zu veranlassen, wobei diese grundsätzlich bestehende Möglichkeit deaktiviert werden kann.

Insgesamt ermöglichen das neue Verfahren und die neue Sicherheitssteuerung eine schnellere Übernahme eines geänderten Codeteils, der sicherheitsrelevante logische Abhängigkeiten repräsentiert. Damit kann ein Anwender die neue Sicherheitssteuerung schneller umprogrammieren als dies bisher der Fall gewesen ist. Die oben genannte Aufgabe ist daher vollständig gelöst.

In einer bevorzugten Ausgestaltung der Erfindung wird der geänderte erste Codeteil nur während einer begrenzten Zeitspanne anstelle des originären ersten Codeteils ausgeführt.

In dieser Ausgestaltung ist eine Änderung des Programmcodes nach dem neuen Verfahren nur temporär möglich. Nach Ablauf der begrenzten Zeitspanne führt der zumindest eine Prozessor daher wieder den originären ersten Codeteil anstelle des geänderten ersten Codeteils aus. Dies kann in einigen Ausführungsbeispielen automatisch erfolgen. Bevorzugt erfordert die Rückkehr zu dem originären ersten Codeteil jedoch einen manuellen Eingriff, wie weiter unten anhand eines bevorzugten Ausführungsbeispiels erläutert ist. In einigen vorteilhaften Ausführungsbeispielen ist die begrenzte Zeitspanne ≤ 24 Stunden, vorteilhaft ≤ 12 Stunden. In weiteren vorteilhaften Ausführungsbeispielen kann die begrenzte Zeitspanne ≤ 5 Stunden oder gar ≤ 0,5 Stunden sein. Die Ausgestaltung besitzt den Vorteil, dass durch das neue Verfahren keine dauerhafte Änderung des sicherheitsrelevanten Programmcodes vorgenommen werden kann, ohne die etablierte und bewährte Vorgehensweise dafür zu umgehen. Infolgedessen ist die Fehlersicherheit im sicherheitsrelevanten Steuerungsablauf erhöht. Insbesondere ist eine dauerhafte Herabsetzung des Sicherheitsniveaus, die bei der Inbetriebnahme einer Anlage zur erleichterten Fehlersuche von Vorteil sein kann, zeitlich begrenzt. Auf Dauer arbeitet die neue Sicherheitssteuerung mit dem originären Programmcode.

In einer weiteren Ausgestaltung nimmt die Sicherheitssteuerung nach Ablauf der begrenzten Zeitspanne einen definierten sicheren Zustand ein.

Ein definierter sicherer Zustand im Sinne dieser Ausgestaltung ist ein Zustand, in dem gefährliche Aktoren in ihren sicheren Zustand gebracht sind. In der Regel erfordert der sichere Zustand einen manuellen Reset oder einen manuellen Neustart der Sicherheitssteuerung für die erneute Inbetriebnahme. In bevorzugten Ausführungsbeispielen ist die Überwachung der begrenzten Zeitspanne in der Firmware der Sicherheitssteuerung implementiert, bevorzugt zweikanalig. Vorteilhaft kann sie vom Anwender nicht außer Kraft gesetzt werden. Die Ausgestaltung bietet eine weiter erhöhte Sicherheit in Bezug auf die sicherheitsrelevante Steuerung.

In einer weiteren Ausgestaltung ist der erste Speicher ein nichtflüchtiger Speicher und der zweite Speicher ein flüchtiger Speicher. Ein nichtflüchtiger Speicher im Sinne dieser Ausgestaltung ist ein Speicher, der den übertragenen Programmcode auch bei Wegfall der Betriebs- oder Versorgungsspannung behält, während ein flüchtiger Speicher die eingespeicherten Codeteile bei Wegfall der Betriebs- oder Versorgungsspannung verliert. Die Ausgestaltung besitzt den Vorteil, dass ein Neustart - und vorzugsweise auch ein manueller Reset - die Nutzung des geänderten ersten Codeteils zuverlässig beendet. Die durch das neue Verfahren gewonnene Flexibilität und Erleichterung bei der Fehlersuche ist durch den flüchtigen Charakter des zweiten Speichers zugunsten einer besseren Absicherung der Anlage begrenzt.

In einer weiteren Ausgestaltung wird ein Programmzeiger der Sicherheitssteuerung geändert, um den geänderten ersten Codeteil anstelle des originären ersten Codeteils auszuführen.

In dieser Ausgestaltung besitzt die Sicherheitssteuerung beide erste Codeteile, gewissermaßen in Koexistenz. Durch Änderung des Programmzeigers, der in an sich bekannter Weise auf den jeweils nächstfolgenden Maschinencodebefehl im Speicher der Steuerung zeigt, ist ein sehr schnelles Umschalten auf den geänderten ersten Codeteil möglich. Des Weiteren kann aufgrund der Koexistenz der beiden Codeteile ohne Weiteres auf den originären Codeteil zurückgewechselt werden. Alternativ hierzu wäre es grundsätzlich aber denkbar, dass der geänderte erste Codeteil aus dem zweiten Speicher in den ersten Speicher übertragen wird und dort den originären ersten Codeteil überschreibt. Die bevorzugte Ausgestaltung vereinfacht demgegenüber die oben erwähnte, temporäre Ausführung des geänderten ersten Codeteils.

In einer weiteren Ausgestaltung führt der zumindest eine Prozessor den originären Programmcode zyklisch aus, wobei der geänderte erste Codeteil nach Abschluss eines Programmzyklus anstelle des originären ersten Codeteils ausgeführt wird.

Diese Ausgestaltung ermöglicht einen definierten nahtlosen Übergang von dem originären ersten Codeteil zu dem geänderten ersten Codeteil im laufenden Betrieb der Sicherheitssteuerung. Vorteilhaft erhält der geänderte erste Codeteil in dieser Ausgestaltung aktuelle Prozesswerte, so dass der Steuerungsablauf trotz der Änderung störungsfrei ausgeführt werden kann.

In einer weiteren Ausgestaltung weist die Sicherheitssteuerung eine optische Anzeige auf, mit der die Ausführung des geänderten ersten Codeteils signalisiert wird. In vorteilhaften Ausführungsbeispielen signalisiert die optische Anzeige die Ausführung des geänderten ersten Codeteils während der gesamten Zeitspanne beginnend ab der Übernahme des geänderten ersten Codeteils bis zum Ablauf der begrenzten Zeitspanne und/oder bis zu einem manuellen Reset oder Neustart, mithin also solange der geänderte erste Codeteil "aktiv" ist. Die Ausgestaltung ist im Hinblick auf die Fehlersicherheit des gesteuerten Prozessablaufs vorteilhaft, da die Abweichung vom originären Programmcode eine Änderung des Sicherheitsniveaus zur Folge haben kann und in dieser Ausgestaltung vorteilhaft kenntlich gemacht ist.

In einer weiteren Ausgestaltung wird der geänderte erste Programmteil zusammen mit dem zumindest einen weiteren Programmteil kompiliert und gebunden, um einen geänderten ausführbaren Programmcode zu erhalten, und der geänderte ausführbare Programmcode wird in den ersten Speicher übertragen, nachdem die Ausführung des originären Programmcodes gestoppt wurde.

In dieser Ausgestaltung wird der geänderte erste Programmteil dauerhaft in den ausführbaren Programmcode eingebunden und gewissermaßen als "neuer originärer Programmcode" ohne zeitliche Begrenzung in die Sicherheitssteuerung geladen. Diese Ausgestaltung ist vorteilhaft, um eine Änderung im ersten Programmteil nach einer ersten Testphase dauerhaft in der neuen Sicherheitssteuerung zu implementieren. Vorteilhaft überschreibt der geänderte ausführbare Programmcode den originären ausführbaren Programmcode in dem ersten Speicher.

In einer weiteren Ausgestaltung wird der geänderte erste Programmteil zweifach kompiliert, um einen geänderten ersten Codeteil und einen geänderten zweiten Codeteil zu erzeugen, wobei der geänderte erste Codeteil und der geänderte zweite Codeteil in den zweiten Speicher übertragen werden und mit Hilfe des zumindest einen Prozessors redundant ausgeführt werden.

Diese Ausgestaltung ist besonders vorteilhaft, um eine Einfehlersicherheit bei der Ausführung des sicherheitsrelevanten ersten Programmteils auch nach der Änderung zu gewährleisten. Vorteilhaft wird auch der originäre erste Programmteil zweifach kompiliert, wobei der geänderte erste Codeteil und der geänderte zweite Codeteil in der beschriebenen Weise anstelle des originären ersten und eines originären zweiten Codeteils ausgeführt werden. Bevorzugt ist ferner, wenn der erste Codeteil und der zweite Codeteil auf separaten Prozessoren ausgeführt werden, um auf diese Weise zwei voneinander getrennte Kanäle zu realisieren, die im Sinne einer mehrkanaligen, redundanten Ausführung arbeiten. Die Ausgestaltung bietet eine hohe Fehlersicherheit, die gerade auch über die neu geschaffene Möglichkeit zur schnellen Änderung eines sicherheitsrelevanten Programmteils erhalten bleibt. Darüber hinaus besitzt diese Ausgestaltung den Vorteil, dass der geänderte erste Programmteil unter realen Bedingungen in der Sicherheitssteuerung ausgeführt wird, was eine dauerhafte Übernahme im Sinne der oben beschriebenen Ausgestaltung erleichtert.

In einer weiteren Ausgestaltung ist die Sicherheitssteuerung eine verteilte Sicherheitssteuerung mit einer Vielzahl von vernetzten Steuereinheiten, auf denen jeweils individueller Programmcode ausgeführt wird, wobei der geänderte erste Codeteil an zumindest zwei verschiedene Steuereinheiten übertragen wird, während der originäre Programmcode ausgeführt wird. In bevorzugten Ausführungsbeispielen beinhaltet die verteilte Sicherheitssteuerung einen zentralen Speicher, in dem der geänderte erste Codeteil bereitgestellt wird, und die zumindest zwei verschiedenen Steuereinheiten laden den geänderten ersten Codeteil aus dem zentralen Speicher in ihren jeweiligen ersten Speicher. Diese Ausgestaltung ermöglicht auf einfache, komfortable und schnelle Weise die Änderung eines komplexen aspekt- und/oder objektorientierten Anwenderprogramms in einer verteilten Sicherheitssteuerung, wobei die Änderungen unter realen Bedingungen in mehreren Steuereinheiten ausgeführt und somit getestet werden können. In vorteilhaften Ausführungsbeispielen ist das Programmiertool dazu ausgebildet, alle vernetzten Steuereinheiten zu ermitteln, auf denen der originäre erste Programmteil ausgeführt wird, um anschließend alle betroffenen Steuereinheiten zu veranlassen, den geänderten ersten Codeteil in den jeweiligen zweiten Speicher zu laden und in der beschriebenen Weise auszuführen. In einigen bevorzugten Ausführungsbeispielen ist das Programmiertool dazu ausgebildet, den geänderten ersten Programmteil für die zumindest zwei verschiedenen Steuereinheiten unterschiedlich zu kompilieren, um den geänderten ersten Programmteil auf unterschiedliche Hardwareplattformen auszuführen.

In einer weiteren Ausgestaltung wird die Änderung des ersten Programmteils in Abhängigkeit von einer Anwenderidentifikation freigegeben oder gesperrt.

In dieser Ausgestaltung muss ein Anwender, der den ersten Programmteil ändern möchte, zunächst eine Identifikationsprozedur erfolgreich durchlaufen. In einigen Ausführungsbeispielen kann die Anwenderidentifizierung die Eingabe eines Passworts beinhalten. Alternativ oder ergänzend kann die Anwenderidentifizierung anhand eines elektronischen und/oder mechanischen Schlüssels erfolgen. Die Ausgestaltung bietet eine erhöhte Sicherheit gegen Manipulationen und unbewusste Eingriffe in den sicherheitsrelevanten Steuerungsablauf.

In einer weiteren Ausgestaltung wird die Übertragung des geänderten ersten Codeteils an den zweiten Speicher in einem weiteren Speicher mit einem Datumsstempel protokolliert. Vorzugsweise ist der weitere Speicher ein nichtflüchtiger Speicher.

Die Ausgestaltung besitzt den Vorteil, dass jede Veränderung an dem sicherheitsrelevanten ersten Programmteil automatisch dokumentiert wird, auch wenn sie nur temporär möglich ist, und somit auch später nachvollzogen werden kann. Dies erleichtert zum einen die Fehlersuche und Optimierung des Programmcodes bei der Programmierung der Sicherheitssteuerung. Andererseits lassen sich Manipulationen oder Manipulationsversuche leichter erkennen und unterbinden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine sehr schematische Darstellung einer komplexen Anlage mit einer verteilten Sicherheitssteuerung nach einem Ausführungsbeispiel der Erfindung;
- Fig. 2: eine schematische Darstellung einer einzelnen Steuereinheit der Anlage aus Fig. 1; und
- Fig. 3: ein Flussdiagramm zur Erläuterung eines Ausführungsbeispiels des neuen Verfahrens.

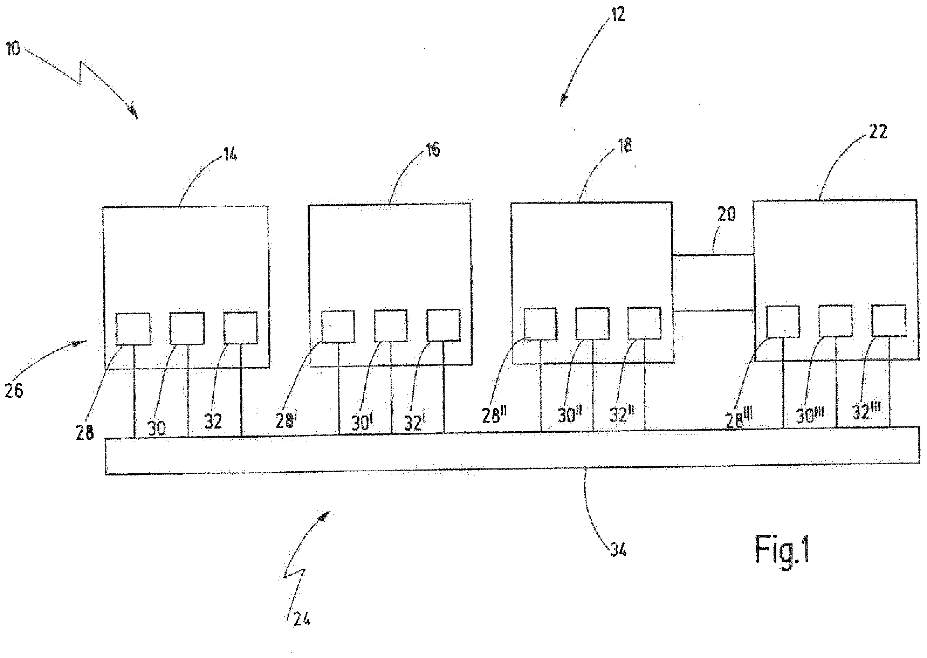

In Fig. 1 ist eine Anlage, die mit einem Ausführungsbeispiel der neuen Sicherheitssteuerung gesteuert wird, in ihrer Gesamtheit mit der Bezugsziffer 10 bezeichnet. Die Anlage 10 beinhaltet eine Vielzahl von Anlagenhardwarekomponenten 12. Im vorliegenden Ausführungsbeispiel sind dies eine Bestückungsstation 14, eine Bearbeitungsstation 16, eine Teststation 18, eine Fördereinheit 20 und eine Verpackungs- und Palettierstation 22. Mit der Bestückungsstation 14, die beispielsweise einen Roboter beinhalten kann, werden der Bearbeitungsstation 16 Werkstücke automatisiert zugeführt. Diese Werkstücke werden in der Bearbeitungsstation 16 bearbeitet. Anschließend werden die bearbeiteten Werkstücke an die Teststation 18 weitergegeben, in der überprüft wird, ob das bearbeitete Werkstück vordefinierte Prüfkriterien erfüllt. Sind diese Prüfkriterien erfüllt, wird das Werkstück mittels der Fördereinheit 20 an die Verpackungs- und Palettierstation 22 übergeben. In dieser werden mehrere Werkstücke zu Gebinden zusammengefasst, die dann auf einer Palette gestapelt werden. Die Anlage 10 steht somit exemplarisch für eine Vielzahl von Anlagen, die automatisiert gesteuert werden, wobei sicherheitsrelevante und nicht-sicherheitsrelevante Prozesse zu einem Gesamtablauf kombiniert sind,

Mit der Bezugsziffer 24 ist hier eine Sicherheitssteuerung gemäß einem Ausführungsbeispiel der Erfindung in ihrer Gesamtheit bezeichnet. Die Sicherheitssteuerung 24 beinhaltet eine Vielzahl von Hardwarekomponenten 26, insbesondere in Form von programmierbaren Steuereinheiten 28, Sensorgeräten 30 und Aktorgeräten 32, sowie mehrere Softwarekomponenten einschließlich eines Anwenderprogramms, das hier nach dem neuen Verfahren erstellt wird. Die Sensorgeräte 30 und Aktorgeräte 32 sind in bevorzugten Ausführungsbeispielen modular zusammengestellte I/O-Geräte, an die eine Vielzahl verschiedener Sensoren und Aktoren angeschlossen werden können, wie etwa Positionsschalter, Drehgeber, Temperatursensoren, Magnetventile, Schütze und/oder elektrische Antriebe. In bevorzugten Ausführungsbeispielen kann eine Steuereinheit zusammen mit einem modularen Sensor- und Aktorgerät eine kombinierte Baugruppe bilden, wie dies prinzipiell von dem eingangs genannten Automatisierungssystem PSS 4000 bekannt ist.

Vorteilhaft sind die Steuereinheiten, Sensoren und Aktoren jeweils einer der Anlagenhardwarekomponenten 12 zugeordnet. Die Steuerungshardwarekomponenten 26 sind vorteilhaft über ein Kommunikationsnetzwerk 34 miteinander verbunden. Das Kommunikationsnetzwerk kann ein Ethernet-basiertes Bussystem beinhalten, wie es von der Pilz GmbH & Co. KG unter der Bezeichnung SafetyNET p® angeboten und vertrieben wird. Alternativ oder ergänzend kann das Kommunikationsnetzwerk 34 weitere Bussysteme beinhalten, die insbesondere für den zyklischen Datenverkehr in einem automatisierten Steuerungssystem ausgebildet sind.

Die Arbeitsbereiche der einzelnen Stationen 14, 16, 18, 22 können beispielsweise durch Schutztüren gesichert sein, die einen Zugang in den gefährlichen Arbeitsbereich der jeweiligen Station nur zulassen, wenn die zugeordnete Steuereinheit die Station in einen sicheren Zustand gesteuert hat. Alternativ oder ergänzend können Lichtgitter oder Lichtvorhänge eingesetzt werden. Darüber hinaus können die einzelnen Stationen 14, 16, 18, 22 mit Not-Aus-Tastern versehen sein, mit denen die jeweilige Station in einen sicheren Zustand überführt werden kann, insbesondere durch Trennen von der Stromversorgung. Hierzu werden in der Regel Schütze angesteuert, die im Stromversorgungspfad zu der jeweiligen Station angeordnet sind.

Bei den vorstehend genannten Schutztüren, Lichtgittern, Lichtvorhängen und Not-Aus-Tastern handelt es sich um typische sicherheitsrelevante Sensoren, deren Ausgangssignale logisch miteinander verknüpft werden, um in Abhängigkeit davon sicherheitsrelevante Aktoren, wie etwa die Schütze im Stromversorgungspfad der Stationen anzusteuern. Die Sensoren 30 einer Station können darüber hinaus zahlreiche nicht-sicherheitsrelevante Sensoren beinhalten, die für die Steuerung des Betriebsablaufs benötigt werden und beispielsweise betriebsmäßige Drehzahlen, Winkel, Positionen oder Geschwindigkeiten erfassen, die für die Steuerung des Betriebsablaufs benötigt werden. Die Aktoren 32 können gleichermaßen nicht-sicherheitsrelevante Aktoren beinhalten, insbesondere Motoren oder Stellzylinder.

Im vorliegenden Ausführungsbeispiel ist jeder Station 14, 16, 18, 22 eine eigene Steuereinheit 28 zugeordnet. Es ist alternativ möglich, mehreren Stationen einer Anlage mit einer gemeinsamen Steuereinheit zu steuern. Die Anlagenkomponenten können baulich und räumlich voneinander getrennt sein. Es ist aber auch denkbar, dass mehrere Anlagenkomponenten zu einer integrierten Station verbunden sind.

In Fig. 1 sind funktionsgleiche Komponenten mit gleichen Bezugsziffern bezeichnet, wobei Striche andeuten ist, dass die jeweiligen Komponenten unterschiedlich realisiert sein können. Entsprechendes gilt auch für Signale. Diese Form der Kennzeichnung gilt auch für die weiteren Figuren.

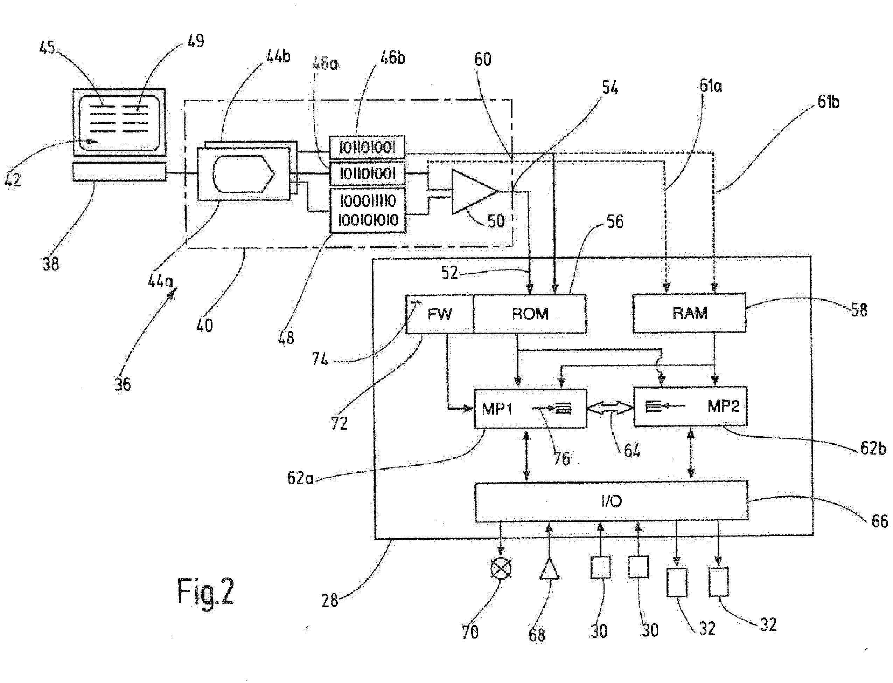

In Fig. 2 ist eine einzelne Steuereinheit 28 zusammen mit einem Programmiertool 36 dargestellt. Das Programmiertool ist in bevorzugten Ausführungsbeispielen ein PC 38, auf dem ein Computerprogramm (Software) 40 ausgeführt wird. Das Computerprogramm 40 stellt auf dem PC 38 einen Programmeditor 42 bereit, der es einem Anwender ermöglicht, ein Anwenderprogramm für die Steuereinheit 28 und/oder für eine Vielzahl von Steuereinheiten 28, 28', 28" etc. in einer für den Anwender komfortablen Programmiersprache zu erstellen. Vorzugsweise stellt der Programmeditor eine oder mehrere Programmiersprachen zur Verfügung, die auf der Norm EN 61131 basieren. Hierzu gehört beispielsweise eine Programmiersprache, die die Definition von logischen Abhängigkeiten zwischen ausgewählten Sensorsignalen und ausgewählten Aktorsignalen in grafischer Form ermöglicht, insbesondere anhand von sogenannten Funktionsblöcken. Das Programmiertool 36 beinhaltet ferner einen Compiler 44, mit dessen Hilfe ein in einer höheren Programmiersprache erstellter Programmteil in einen maschinenlesbaren und von der Steuerung 28 ausführbaren Maschinencode übersetzt werden kann. In bevorzugten Ausführungsbeispielen beinhaltet das Programmiertool einen ersten Compiler 44a und einen zweiten Compiler 44b, die aus einem sicherheitsrelevanten Programmteil 45 zwei separate ausführbare Programmcodes erzeugen, die anschließend von einem oder mehreren Prozessoren redundant ausgeführt werden, um eine höhere Fehlersicherheit zu erreichen. Im dargestellten Ausführungsbeispiel ist mit der Bezugsziffer 46a ein erster Codeteil bezeichnet, der mit dem ersten Compiler 44a aus dem ersten Programmteil 45 erzeugt wurde und der sicherheitsrelevante logische Abhängigkeiten in maschinenlesbarer Form definiert. Bezugsziffer 46b bezeichnet einen zweiten Codeteil, den der zweite Compiler 44b aus dem ersten Programmteil 45 erzeugt hat. Der zweite Codeteil 46b repräsentiert dieselben logischen Abhängigkeiten wie der erste Codeteil 46a, allerdings in einer redundanten und vorzugsweise diversitären Implementierung. In einigen bevorzugten Ausführungsbeispielen können die Codeteile 46a, 46b für unterschiedliche Prozessoren kompiliert sein. Prinzipiell ist jedoch eine Ausführung der Codeteile 46a, 46b auf einem Prozessor oder auf mehreren typgleichen Prozessoren denkbar.

Mit der Bezugsziffer 48 ist ein weiterer Codeteil bezeichnet, der in diesem Ausführungsbeispiel mit Hilfe des ersten Compilers 44a aus einem weiteren Programmteil 49 erzeugt wurde. Der weitere Codeteil 48 repräsentiert logische Abhängigkeiten zwischen ausgewählten Sensorsignalen und Aktorsignalen, die keine sicherheitsrelevanten Funktionen betreffen. Mithin ist der Codeteil 48 in diesem Ausführungsbeispiel ein Codeteil für einen Standard-Prozess, wohingegen die redundanten Codeteile 46a, 46b zum Steuern eines sicherheitsrelevanten Prozesses dienen.

Mit der Bezugsziffer 50 ist ein Binder bezeichnet, mit dessen Hilfe mehrere Codeteile 46a, 48 zu einem ausführbaren Programmcode für die Steuerung 28 zusammengefügt werden können. Es sei angemerkt, dass das neue Verfahren über die hier lediglich beispielhaft dargestellten Codeteile hinaus eine Vielzahl von Codeteilen erzeugen kann, von denen einige sicherheitsrelevant sind und andere nicht-sicherheitsrelevant sind. Typischerweise fügt der Binder 50 eine Vielzahl von Codeteilen zu einem ausführbaren Programmcode 52 zusammen. Insbesondere ist es in einigen Ausführungsbeispielen möglich, dass mehrere sicherheitsrelevante Codeteile zu einem ausführbaren Programmcode zusammengefügt werden.

Das Programmiertool 36 besitzt eine erste Schnittstelle 54, über die der ausführbare Programmcode 52 in einen ersten Speicher 56 der Steuereinheit 28 übertragen werden kann. In bevorzugten Ausführungsbeispielen ist der erste Speicher 56 ein nichtflüchtiger Speicher, beispielsweise in Form eines EEPROM, der in der Steuereinheit 28 fest verbaut ist. Alternativ oder ergänzend kann der erste nichtflüchtige Speicher 56 ein Flashspeicher sein, beispielsweise in Form einer SD-Karte.

Mit der Bezugsziffer 58 ist ein zweiter Speicher in der Steuereinheit 28 bezeichnet, der in den bevorzugten Ausführungsbeispielen ein flüchtiger Speicher ist. Das Programmiertool 36 besitzt eine weitere Schnittstelle 60, über die insbesondere ein geänderter erster Codeteil 61a sowie ein geänderter zweiter Codeteil 61b in den Speicher 58 übertragen werden kann.

Mit den Bezugsziffern 62a, 62b sind hier zwei Mikroprozessoren bezeichnet, die in den bevorzugten Ausführungsbeispielen der Steuereinheit 28 redundant zueinander arbeiten. Ein Doppelpfeil 64 symbolisiert, dass die Mikroprozessoren 62a, 62b ihre Arbeitsergebnisse miteinander vergleichen und/oder sich gegenseitig überprüfen können. In bevorzugten Ausführungsbeispielen führt der eine Mikroprozessor 62a den ersten sicherheitsrelevanten Codeteil 46a und den nicht-sicherheitsrelevanten Codeteil 48 aus, während der zweite Mikroprozessor 62b den zweiten sicherheitsrelevanten Codeteil 46b ausführt. Im Allgemeinen ist es bevorzugt, wenn zumindest die sicherheitsrelevanten Codeteile von der Steuereinheit 28 zweikanalig-redundant ausgeführt werden, um eine hohe Fehlersicherheit entsprechend den Anforderungen von SIL3 und/oder PL e im Sinne der eingangs genannten Normen zu erreichen. Prinzipiell ist eine fehlersichere Realisierung der Steuereinheit 28 jedoch auch in anderer Weise möglich.

Mit der Bezugsziffer 66 ist eine I/O-Schnittstelle bezeichnet, über die die Steuereinheit 28 aktuelle Prozesswerte von Sensoren 30 einlesen kann und aktuelle Prozesswerte zum Steuern der Aktoren 32 ausgeben kann. In bevorzugten Ausführungsbeispielen beinhaltet die I/O-Schnittstelle eine Busschnittstelle zum Anschluss der Steuereinheit 28 an das Kommunikationsnetzwerk 34.

In einigen Ausführungsbeispielen beinhaltet die I/O-Schnittstelle 66 eine Schnittstelle zum Zuführen einer Anwenderidentifikation 68. In einigen Ausführungsbeispielen kann die Anwenderidentifikation die Eingabe eines Passwortes und/oder das Einlesen eines elektronischen und/oder mechanischen Schlüssels beinhalten. Alternativ oder ergänzend hierzu kann die Schnittstelle zum Einlesen der Anwenderidentifikation auch in dem Programmiertool 36 implementiert sein (hier nicht dargestellt).

Bei der Bezugsziffer 70 ist eine optische Anzeige dargestellt, die beispielsweise in Form einer Signalleuchte realisiert ist. Die Anzeige 70 signalisiert in bevorzugten Ausführungsbeispielen, wenn ein geänderter erster Codeteil 61a von der Steuereinheit 28 ausgeführt wird, wie im Folgenden erläutert ist.

Mit der Bezugsziffer 72 ist ein weiterer nichtflüchtiger Speicher bezeichnet, in dem die sogenannte Firmware der Steuereinheit 28 gespeichert ist. Die Firmware bildet ein Betriebssystem, mit dessen Hilfe die Steuereinheit 28 in die Lage versetzt wird, Codeteile 46a, 46b, 48, die über das Programmiertool 36 in die Speicher 56, 58 geladen wurden, auszuführen. In bevorzugten Ausführungsbeispielen ist in der Firmware eine definierte Zeitspanne 74 hinterlegt, die die Ausführung eines geänderten ersten Codeteils 61a und eines geänderten zweiten Codeteils 61b zeitlich begrenzt.

Jeder der Mikroprozessoren 62a, 62b besitzt in diesem Ausführungsbeispiel einen Programmzeiger 76, der in an sich bekannter Weise auf den jeweils nächsten auszuführenden Befehlscode innerhalb des zyklisch ausgeführten Programmcodes verweist. In einigen bevorzugten Ausführungsbeispielen wird der Programmzeiger 76 in jedem der beiden Mikroprozessoren 62a, 62b mit Hilfe der Firmware 72 und mit Hilfe des Programmiertools 36 so verändert, dass der Prozessor 62a temporär einen geänderten ersten Codeteil 61a und der Prozessor 62b temporär einen geänderten zweiten Codeteil 61b ausführt.

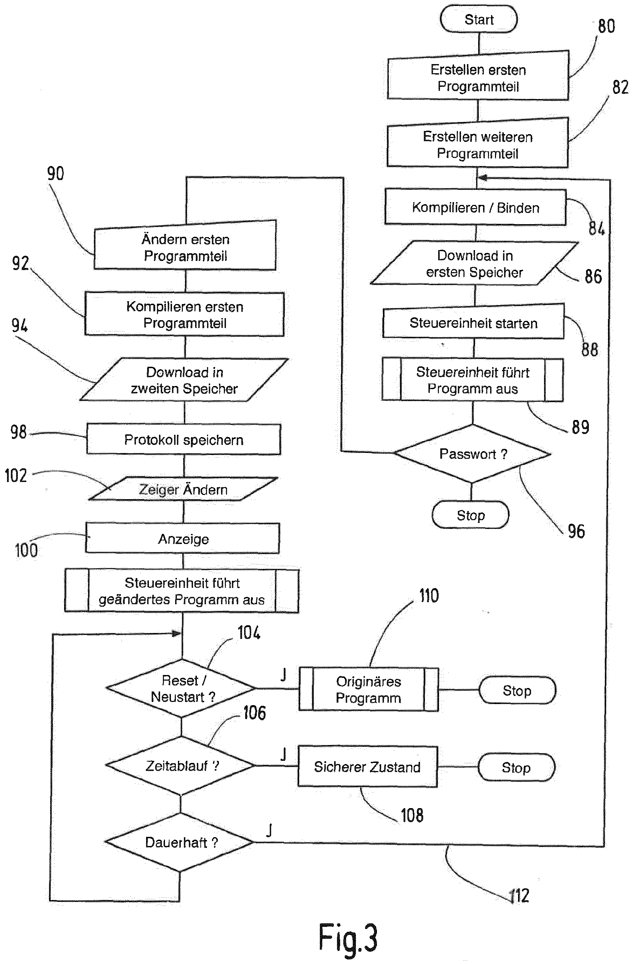

Fig. 3 erläutert ein bevorzugtes Ausführungsbeispiel des neuen Verfahrens anhand eines vereinfachten Flussdiagramms. Gemäß Schritt 80 erstellt ein Anwender, der die Sicherheitssteuerung 24 programmieren möchte, zumindest einen ersten Programmteil, der sicherheitsrelevante logische Abhängigkeiten zwischen ausgewählten Sensorsignalen und ausgewählten Aktorsignalen definiert. Kurz gesagt erstellt der Anwender zumindest einen FS-Programmteil. Der FS-Programmteil kann in praktischen Ausführungsbeispielen aus einer Vielzahl von FS-Programmmodulen bestehen, so dass der erste Programmteil in weitere Unterprogrammteile unterteilt sein kann.

Gemäß Schritt 82 erstellt der Anwender zumindest einen weiteren Programmteil, in dem typischerweise keine sicherheitsrelevanten logischen Abhängigkeiten zwischen Sensorsignalen und Aktorsignalen definiert sind. Kurz gesagt erstellt der Anwender im Schritt 82 einen ST-Programmteil.

Gemäß Schritt 84 werden die Programmteile aus den Schritten 80, 82 kompiliert und zu einem ausführbaren Programmcode für die Sicherheitssteuerung 24 gebunden. In bevorzugten Ausführungsbeispielen wird der erste Programmteil (FS-Programmteil) mit Hilfe der zwei Compiler 44a, 44b zweifach kompiliert, um zwei redundante FS-Codeteile zu erzeugen. In einigen Ausführungsbeispielen wird nur einer der beiden redundanten FS-Codeteile mit dem ST-Codeteil aus Schritt 82 gebunden. Prinzipiell kann der ST-Codeteil in anderen Ausführungsbeispielen jedoch jeweils mit einem der beiden FS-Codeteile zu einem ausführbaren Programmcode gebunden werden.

Gemäß Schritt 86 wird der ausführbare Programmcode in den ersten Speicher der Sicherheitssteuerung heruntergeladen. Anschließend wird die Sicherheitssteuerung 24 gemäß Schritt 88 in Betrieb genommen, indem der heruntergeladene Programmcode mit Hilfe der Prozessoren in der Sicherheitssteuerung ausgeführt wird. In an sich bekannter Weise führt die Sicherheitssteuerung 24 den Programmcode aus dem ersten Speicher zyklisch wiederholt aus, wobei sie jeweils aktuelle Prozesswerte der Sensoren 30 einliest und in jedem Zyklus jeweils aktuelle Prozesswerte für die Aktoren 32 bestimmt und über die I/O-Schnittstelle an die Aktoren ausgibt (Schritt 89).

Entsprechend einem bevorzugten Ausführungsbeispiel kann der Anwender während der Ausführung des Programmcodes eine Änderung im ersten Programmteil vornehmen (Schritt 90), den geänderten ersten Programmteil erneut kompilieren (Schritt 92) und den so erhaltenen geänderten Codeteil gemäß Schritt 94 in den zweiten Speicher der Sicherheitssteuerung herunterladen. In den bevorzugten Ausführungsbeispielen ist zuvor eine Anwenderidentifikation erforderlich, die beispielsweise eine Passwortabfrage 96 beinhaltet. Wie bereits oben angedeutet, kann der Schritt 92 eine zweifache Kompilierung des geänderten ersten Programmteils beinhalten, um zwei redundante geänderte Codeteile 61a, 61b zu erhalten.

Gemäß Schritt 98 wird das Herunterladen des geänderten ersten Codeteils mit einem Zeitstempel protokolliert. In bevorzugten Ausführungsbeispielen wird das Protokoll zusammen mit dem Zeitstempel in einem nichtflüchtigen Speicher des Programmiertools 36 und/oder der Sicherheitssteuerung 24 abgespeichert. Ferner wird gemäß Schritt 100 die Anzeige 70 aktiviert.

Gemäß Schritt 102, der auch vor dem Aktivieren der Anzeige erfolgen kann, wird der Programmzeiger des zumindest einen Prozessors der Sicherheitssteuerung mit Hilfe des Programmiertools 36 und/oder der Firmware 72 so geändert, dass er nunmehr auf den geänderten ersten Codeteil im flüchtigen Speicher 58 verweist, sobald im Rahmen der zyklischen Ausführung des Programmcodes aus dem ersten Speicher 56 der sicherheitsrelevante erste Codeteil ausgeführt werden soll. Infolgedessen wird anstelle des originären ersten Codeteils 46a aus dem ersten Speicher 56 nunmehr der geänderte erste Codeteil 61a aus dem flüchtigen Speicher 58 ausgeführt. In den bevorzugten Ausführungsbeispielen wird gleichermaßen der redundante geänderte zweite Codeteil 61b aus dem flüchtigen Speicher 58 anstelle des redundanten originären zweiten Codeteils 46b aus dem Speicher 56 ausgeführt.

Die zyklische Ausführung des Programmcodes inklusive der geänderten sicherheitsrelevanten Codeteile ist in den bevorzugten Ausführungsbeispielen zeitlich begrenzt. Dementsprechend wird gemäß Schritt 104 abgefragt, ob die Sicherheitssteuerung durch einen Softwarereset oder einen Neustart zu dem originären Programmcode zurückkehren soll. Ist dies nicht der Fall, wird gemäß Schritt 106 überprüft, ob das maximale Zeitlimit 74 für die temporäre Ausführung des geänderten Programmcodes erreicht ist. Ist dies der Fall, sorgt die Firmware der Sicherheitssteuerung 24 in den bevorzugten Ausführungsbeispielen dafür, dass die Sicherheitssteuerung und mithin die Anlage 10 einen sicheren Zustand einnimmt (Schritt 108), aus dem heraus ein manueller Neustart erforderlich ist. Entsprechend Schritte 110 führt die Sicherheitssteuerung nach dem manuellen Neustart wieder den originären, nicht-geänderten Programmcode aus.

Wenn der Anwender den geänderten Programmcode dauerhaft ausgeführt haben möchte, muss er gemäß Schritt 112 den geänderten ersten Programmteil zusammen mit dem weiteren Programmteil erneut kompilieren und binden. Der geänderte Programmcode wird somit als neuer originärer Programmcode in den nicht-flüchtigen Speicher 56 der Sicherheitssteuerung 24 übertragen.

In den bevorzugten Ausführungsbeispielen können mit dem neuen Verfahren lediglich logische Abhängigkeiten in dem ersten Programmteil 45 geändert werden, nicht jedoch I/O-Zuordnungen zwischen physischen Anschlüssen der Sicherheitssteuerung 24 und Prozessvariablen (sogenanntes I/O-Mapping). Auch eine Änderung in der Hardware der Sicherheitssteuerung 24 ist in den bevorzugten Ausführungsbeispielen ausgeschlossen, solange die Sicherheitssteuerung 24 den Programmcode ausführt. Mit anderen Worten müssen solche Änderungen vom Anwender durchgeführt werden, wenn die Sicherheitssteuerung 24 außer Betrieb gesetzt ist und keine aktuellen Steuerfunktionen ausführt.

In allen bevorzugten Ausführungsbeispielen sind die Änderung im ersten Programmteil und die daraus folgende Änderung des ersten Codeteils nicht-persistent. Dies bedeutet, dass der ursprünglich auf die Sicherheitssteuerung übertragene Programmcode nicht überschrieben wird, sondern unverändert beibehalten bleibt. In allen bevorzugten Ausführungsbeispielen werden die Änderungen nach dem neuen Verfahren nur im flüchtigen Speicher 58 durchgeführt. Infolgedessen kehrt die Sicherheitssteuerung nach Ausführen eines Resetbefehls oder durch einen Neustart, beispielsweise nach Ausschalten der Versorgungsspannung, zu dem originären Programmcode zurück. Eine dauerhafte Änderung des Programmcodes erfordert in den bevorzugten Ausführungsbeispielen einen erneuten Download des vollständigen kompilierten und gebundenen Programmcodes.

Wie bereits weiter oben angedeutet wurde, ermittelt das Programmiertool 36 in den bevorzugten Ausführungsbeispielen sämtliche Steuereinheiten 28, 28', 28" etc., auf denen ein geänderter erster Codeteil 61a ausgeführt werden soll. Anschließend stellt das Programmiertool 36 in den bevorzugten Ausführungsbeispielen den geänderten ersten Codeteil (und vorzugsweise auch den geänderten zweiten Codeteil für die redundante Ausführung) zur Übernahme in alle betroffenen Steuereinheiten zur Verfügung. Konsequenterweise werden anschließend die Programmzeiger in allen betroffenen Steuereinheiten auf den geänderten Codeteil temporär umgeleitet.

In organisatorischer Hinsicht liegt es in der Verantwortung des Anwenders, eine spezielle Risikoanalyse für die Änderung im ersten Programmteil 45 durchzuführen. Gegebenenfalls muss der Anwender dafür Sorge tragen, dass bei einem verminderten Sicherheitslevel Gefahren für Personen im Umfeld der gesteuerten Anlage auf andere Weise beherrscht werden.

## Patentansprüche

1. Verfahren zum Programmieren einer Sicherheitssteuerung (24), die eine Vielzahl von Eingängen zum Aufnehmen von Sensorsignalen (30), eine Vielzahl von Ausgängen zum Ausgeben von Aktorsignalen (32) und zumindest einen Prozessor (62a, 62b) zum Ausführen von Programmcode aufweist, mit den Schritten:
- Erstellen eines Anwenderprogramms, das logische Abhängigkeiten zwischen den Sensorsignalen (30) und den Aktorsignalen (32) definiert, unter Verwendung eines Programmeditors (36), wobei das Anwenderprogramm einen ersten Programmteil (45) und zumindest einen weiteren Programmteil (49) aufweist, und wobei der erste Programmteil (45) sicherheitsrelevante logische Abhängigkeiten zwischen ausgewählten Sensorsignalen und Aktorsignalen definiert,
- Kompilieren und Binden des ersten und des zumindest einen weiteren Programmteils, um einen ausführbaren originären Programmcode für den zumindest einen Prozessor (62a, 62b) zu erhalten, wobei der originäre Programmcode einen originären ersten Codeteil (46a) aufweist, der den ersten Programmteil repräsentiert, und zumindest einen originären weiteren Codeteil (48), der den zumindest einen weiteren Programmteil repräsentiert,
- Übertragen des originären Programmcodes in einen ersten Speicher (56) der Sicherheitssteuerung (24),
- Ausführen des originären Programmcodes mit Hilfe des zumindest einen Prozessors (62a, 62b), um die Aktorsignale in Abhängigkeit von den Sensorsignalen zu erzeugen,
- Ändern des ersten Programmteils (45) unter Verwendung des Programmeditors (36), um einen geänderten ersten Programmteil zu erhalten, und
- Kompilieren des geänderten ersten Programmteils, um einen geänderten ersten Codeteil (61a) zu erhalten,
**dadurch gekennzeichnet, dass** der geänderte ersten Codeteil (61a) in einen zweiten Speicher (58) der Sicherheitssteuerung (24) übertragen wird, während der originäre Programmcode mit Hilfe des zumindest einen Prozessors (62a, 62b) ausgeführt wird, und dass der geänderte ersten Codeteil (61a) anschließend in Ergänzung zu dem originären weiteren Codeteil (48) und anstelle des originären ersten Codeteils (46a) mit Hilfe des zumindest einen Prozessors (62a, 62b) ausgeführt wird, um die Aktorsignale in Abhängigkeit von dem geänderten ersten Programmteil zu erzeugen.

2. Verfahren nach Anspruch 1, **dadurch gekennzeichnet, dass** der geänderte erste Codeteil (61a) nur während einer begrenzten Zeitspanne (74) anstelle des originären ersten Codeteils (46a) ausgeführt wird.

3. Verfahren nach Anspruch 2, **dadurch gekennzeichnet, dass** die Sicherheitssteuerung (24) nach Ablauf der begrenzten Zeitspanne (74) einen definierten sicheren Zustand einnimmt.

4. Verfahren nach einem der Ansprüche 1 bis 3, **dadurch gekennzeichnet, dass** der erste Speicher (56) ein nichtflüchtiger Speicher ist, und dass der zweite Speicher (58) ein flüchtiger Speicher ist.

5. Verfahren nach einem der Ansprüche 1 bis 4, **dadurch gekennzeichnet, dass** ein Programmzeiger (76) der Sicherheitssteuerung (24) geändert wird, um den geänderten ersten Codeteil (61a) anstelle des originären ersten Codeteils (46a) auszuführen.

6. Verfahren nach einem der Ansprüche 1 bis 5, **dadurch gekennzeichnet, dass** der zumindest eine Prozessor (62a, 62b) den originären Programmcode zyklisch ausführt, und dass der geänderte ersten Codeteil (61a) nach Abschluss eines Programmzyklus anstelle des originären ersten Codeteils (46a) ausgeführt wird.

7. Verfahren nach einem der Ansprüche 1 bis 6, **dadurch gekennzeichnet, dass** die Sicherheitssteuerung (24) eine optische Anzeige (70) aufweist, mit der die Ausführung des geänderten ersten Codeteils (61a) signalisiert wird.

8. Verfahren nach einem der Ansprüche 1 bis 7, **dadurch gekennzeichnet, dass** der geänderte erste Programmteil (61a) zusammen mit dem zumindest einen weiteren Programmteil (48) kompiliert und gebunden wird, um einen geänderten ausführbaren Programmcode zu erhalten, und dass der geänderte ausführbare Programmcode in den ersten Speicher (56) übertragen wird, nachdem die Ausführung des originären Programmcodes gestoppt wurde.

9. Verfahren nach einem der Ansprüche 1 bis 8, **dadurch gekennzeichnet, dass** der geänderte erste Programmteil zweifach kompiliert wird, um einen geänderten ersten Codeteil (61a) und einen geänderten zweiten Codeteil (61b) zu erzeugen, wobei der geänderte erste Codeteil und der geänderte zweite Codeteil in den zweiten Speicher (58) übertragen werden und mit Hilfe des zumindest einen Prozessors (62a, 62b) redundant ausgeführt werden.

10. Verfahren nach einem der Ansprüche 1 bis 9, **dadurch gekennzeichnet, dass** die Sicherheitssteuerung (24) eine verteilte Sicherheitssteuerung mit einer Vielzahl von vernetzten Steuereinheiten (28, 28', 28", 28''') ist, auf denen jeweils ein individueller Programmcode ausgeführt wird, wobei der geänderte erste Codeteil an zumindest zwei verschiedene Steuereinheiten übertragen wird, während der originäre Programmcode ausgeführt wird.

11. Verfahren nach einem der Ansprüche 1 bis 10, **dadurch gekennzeichnet, dass** die Änderung des ersten Programmteils (45) in Abhängigkeit von einer Anwenderidentifizierung (68) freigegeben oder gesperrt wird.

12. Verfahren nach einem der Ansprüche 1 bis 11, **dadurch gekennzeichnet, dass** die Übertragung des geänderten ersten Codeteils (61a) an den zweiten Speicher (58) in einem weiteren Speicher (72) zusammen mit einem Datumsstempel protokolliert wird.

13. Sicherheitssteuerung zum fehlersicheren Steuern eines sicherheitskritischen Prozesses, mit einer Vielzahl von Eingängen zum Aufnehmen von Sensorsignalen, mit einer Vielzahl von Ausgängen zum Ausgeben von Aktorsignalen, mit zumindest einem Prozessor (62a, 62b) zum zyklischen Ausführen von Programmcode, mit einem ersten nichtflüchtigen Speicher (56), mit einem zweiten flüchtigen Speicher (58), und mit einem Programmiertool (36) zum Erstellen eines Anwenderprogramms, das logische Abhängigkeiten zwischen ausgewählten Sensorsignalen und ausgewählten Aktorsignalen definiert,
wobei das Programmiertool (36) einen Programmeditor (42) aufweist, der dazu ausgebildet ist, einen ersten Programmteil und zumindest einen weiteren Programmteil zu erzeugen, wobei der erste Programmteil sicherheitsrelevante logische Abhängigkeiten zwischen einigen ausgewählten Sensorsignalen und Aktorsignalen definiert,
wobei das Programmiertool (36) ferner einen Compiler (44) aufweist, der dazu ausgebildet ist, den ersten und den zumindest einen weiteren Programmteil zu kompilieren und zu einem ausführbaren originären Programmcode für den zumindest einen Prozessor (62a, 62b) binden, wobei der originäre Programmcode einen originären ersten Codeteil (46a) aufweist, der den ersten Programmteil repräsentiert, und zumindest einen originären weiteren Codeteil (48), der den zumindest einen weiteren Programmteil repräsentiert, und
wobei das Programmiertool (36) eine Schnittstelle (54) zum Übertragen des originären Programmcodes in den ersten Speicher aufweist,
**dadurch gekennzeichnet, dass** das Programmiertool (36) dazu ausgebildet ist, den ersten Programmteil separat von dem weiteren Programmteil zu ändern und zu kompilieren, um einen geänderten ersten Codeteil zu erhalten, und dass das Programmiertool (36) eine weitere Schnittstelle (60) aufweist, die dazu ausgebildet ist, den geänderten ersten Codeteil in den zweiten Speicher (58) zu übertragen, während der originäre Programmcode mit Hilfe des zumindest einen Prozessors (62a, 62b) ausgeführt wird, wobei die Sicherheitssteuerung (24) dazu ausgebildet ist, den geänderten ersten Codeteil in Ergänzung zu dem originären weiteren Codeteil und anstelle des originären ersten Codeteils mit Hilfe des zumindest einen Prozessors (62a, 62b) auszuführen, um die Aktorsignale in Abhängigkeit von dem geänderten ersten Programmteil zu erzeugen.

14. Computerprogramm für eine Sicherheitssteuerung zum fehlersicheren Steuern eines sicherheitskritischen Prozesses, wobei die Sicherheitssteuerung eine Vielzahl von Eingängen zum Aufnehmen von Sensorsignalen, eine Vielzahl von Ausgängen zum Ausgeben von Aktorsignalen, zumindest einen Prozessor zum zyklischen Ausführen von Programmcode, einen ersten nichtflüchtigen Speicher, einen zweiten flüchtigen Speicher, und ein Programmiertool zum Erstellen eines Anwenderprogramms aufweist, das logische Abhängigkeiten zwischen ausgewählten Sensorsignalen und ausgewählten Aktorsignalen definiert, wobei das Computerprogramm dazu ausgebildet ist, ein Verfahren nach einem der Ansprüche 1 bis 12 auszuführen, wenn das Computerprogramm auf der Sicherheitssteuerung implementiert ist.

## Claims

1. A method for programming a safety controller (24), which has a plurality of inputs for receiving sensor signals (30), a plurality of outputs for outputting actuator signals (32), and at least one processor (62a, 62b) for executing program code, the method comprising the steps of:
creating a user program which defines logical dependencies between the sensor signals (30) and the actuator signals (32), using a program editor (36), wherein the user program has a first program portion (45) and at least one additional program portion (49), and wherein the first program portion (45) defines safety-related logical dependencies between selected sensor signals and actuator signals,
compiling and linking the first and the at least one additional program portion, in order to obtain an executable original program code for the at least one processor (62a, 62b), wherein the original program code has an original first code portion (46a) which represents the first program portion, and at least one original additional code portion (48) which represents the at least one additional program portion,
transferring the original program code to a first memory (56) of the safety controller (24),
executing the original program code by means of the at least one processor (62a, 62b), in order to generate the actuator signals as a function of the sensor signals,
modifying the first program portion (45) using the program editor (36), in order to obtain a modified first program portion, and
compiling the modified first program portion, in order to obtain a modified first code portion (61a),
**characterized in that** the modified first code portion (61a) is transferred to a second memory (58) of the safety controller (24) while the original program code is executed by means of the at least one processor (62a, 62b), and the modified first code portion (61a) is then executed in addition to the original additional code portion (48) and instead of the original first code portion (46a) by means of the at least one processor (62a, 62b), in order to generate the actuator signals as a function of the modified first program portion.

2. The method of Claim 1, **characterized in that** the modified first code portion (61a) is executed instead of the original first code portion (46a) only during a limited period of time (74).

3. The method of Claim 2, **characterized in that** the safety controller (24) enters into a defined safe state after the limited period of time (74) has elapsed.

4. The method of any one of Claims 1 to 3, **characterized in that** the first memory (56) is a non-volatile memory and the second memory (58) is a volatile memory.

5. The method of any one of Claims 1 to 4, **characterized in that** a program code pointer (76) of the safety controller (24) is changed in order to execute the modified first code portion (61a) instead of the original first code portion (46a).

6. The method of any one of Claims 1 to 5, **characterized in that** the at least one processor (62a, 62b) executes the original program code cyclically, and the modified first code portion (61a) is executed instead of the original first code portion (46a)after the completion of a program cycle.

7. The method of any one of Claims 1 to 6, **characterized in that** the safety controller (24) has a visual indicator (70) via which the execution of the modified first code portion (61a) is indicated.

8. The method of any one of Claims 1 to 7, **characterized in that** the modified first program portion (61a), together with the at least one additional program portion (48), is compiled and linked in order to obtain a modified executable program code, and the modified executable program code is transferred to the first memory (56) after the execution of the original program code has been stopped.

9. The method of any one of Claims 1 to 8, **characterized in that** the modified first program portion is compiled twice in order to generate a modified first code portion (61a) and a modified second code portion (61b), wherein the modified first code portion and the modified second code portion are transferred to the second memory (58) and are executed redundantly by means of the at least one processor (62a, 62b).

10. The method of any one of Claims 1 to 9, **characterized in that** the safety controller (24) is a distributed safety controller including a plurality of networked control units (28, 28', 28", 28'''), on each of which an individual program code is executed, wherein the modified first code portion is transferred to at least two different control units while the original program code is executed.

11. The method of any one of Claims 1 to 10, **characterized in that** the modification of the first program portion (45) is enabled or disabled as a function of a user identification (68).

12. The method of any one of Claims 1 to 11, **characterized in that** the transfer of the modified first code portion (61a) to the second memory (58) is logged in an additional memory (72) together with a date stamp.

13. A safety controller for fail-safe control of a safety-critical process, comprising
a plurality of inputs for receiving sensor signals,
a plurality of outputs for outputting actuator signals,
at least one processor (62a, 62b) for cyclically executing program code,
a first non-volatile memory (56),
a second volatile memory (58), and
a programming tool (36) for creating a user program which defines logical dependencies between selected sensor signals and selected actuator signals,
wherein the programming tool (36) has a program editor (42) designed to generate a first program portion and at least one additional program portion,
wherein the first program portion defines safety-related logical dependencies between some selected sensor signals and actuator signals,
wherein the programming tool (36) further has a compiler (44) designed to compile the first and the at least one additional program portion and to link it in order to form an executable original program code for the at least one processor (62a, 62b),
wherein the original program code has an original first code portion (46a), which represents the first program portion, and at least one original additional code portion (48), which represents the at least one additional program portion, and
wherein the programming tool (36) has an interface (54) for transferring the original program code into the first memory,
**characterized in that** the programming tool (36) is designed to modify and to compile the first program portion separately from the additional program portion, in order to obtain a modified first code portion, and the programming tool (36) has an additional interface (60) designed to transfer the modified first code portion to the second memory (58) while the original program code is executed by means of the at least one processor (62a, 62b),
wherein the safety controller (24) is designed to execute the modified first code portion in addition to the original additional code portion and instead of the original first code portion by means of the at least one processor (62a, 62b), in order to generate the actuator signals as a function of the modified first program portion.

14. A computer program for a safety controller for fail-safe control of a safety-critical process, wherein the safety controller has a plurality of inputs for receiving sensor signals, a plurality of outputs for outputting actuator signals, at least one processor for cyclically executing program code, a first non-volatile memory, a second volatile memory, and a programming tool for creating a user program which defines logical dependencies between selected sensor signals and selected actuator signals, wherein the computer program is designed to execute a method according to one of Claims 1 to 12 when the computer program is implemented on the safety controller.

## Revendications

1. Procédé de programmation d'une commande de sécurité (24), laquelle possède une pluralité d'entrées destinées à accueillir des signaux de capteur (30), une pluralité de sorties destinées à délivrer des signaux d'actionneur (32) et au moins un processeur (62a, 62b) destiné à exécuter un code de programme, comprenant les étapes suivantes :
- création d'un programme d'utilisateur, qui définit des dépendances logiques entre les signaux de capteur (30) et les signaux d'actionneur (32), en utilisant un éditeur de programmes (36), le programme d'utilisateur possédant une première partie de programme (45) et au moins une partie de programme supplémentaire (49), et la première partie de programme (45) définissant des dépendances logiques relatives à la sécurité entre des signaux de capteur et des signaux d'actionneur choisis,
- compilation et attachement de la première et de l'au moins une partie de programme supplémentaire afin d'obtenir un code de programme initial exécutable pour l'au moins un processeur (62a, 62b), le code de programme initial possédant une première partie de code initiale (46a) qui représente la première partie de programme et au moins une partie de code supplémentaire initiale (48) qui représente l'au moins une partie de programme supplémentaire,
- transmission du code de programme initial dans une première mémoire (56) de la commande de sécurité (24),
- exécution du code de programme initial à l'aide de l'au moins un processeur (62a, 62b) en vue de générer les signaux d'actionneur en fonction des signaux de capteur,
- modification de la première partie de programme (45) en utilisant l'éditeur de programme (36) en vue d'obtenir une première partie de programme modifiée, et
- compilation de la première partie de programme modifiée en vue d'obtenir une première partie de code modifiée (61a),
**caractérisé en ce que** la première partie de code modifiée (61a) est transmise dans une deuxième mémoire (58) de la commande de sécurité (24) pendant que le code de programme initial est exécuté à l'aide de l'au moins un processeur (62a, 62b), et **en ce que** la première partie de code modifiée (61a) est ensuite exécutée à l'aide de l'au moins un processeur (62a, 62b) en complément de la partie de code supplémentaire initiale (48) et à la place de la première partie de code initiale (46a) en vue de générer les signaux d'actionneur en fonction de la première partie de programme modifiée.

2. Procédé selon la revendication 1, **caractérisé en ce que** la première partie de code modifiée (61a) est seulement exécutée à la place de la première partie de code initiale (46a) pendant un intervalle de temps limité (74).

3. Procédé selon la revendication 2, **caractérisé en ce que** la commande de sécurité (24) adopte un état sécurisé défini après l'écoulement de l'intervalle de temps limité (74).

4. Procédé selon l'une des revendications 1 à 3, **caractérisé en ce que** la première mémoire (56) est une mémoire non volatile et **en ce que** la deuxième mémoire (58) est une mémoire volatile.

5. Procédé selon l'une des revendications 1 à 4, **caractérisé en ce qu'**un pointeur de programme (76) de la commande de sécurité (24) est modifié en vue d'exécuter la première partie de code modifiée (61a) à la place de la première partie de code initiale (46a).

6. Procédé selon l'une des revendications 1 à 5, **caractérisé en ce que** l'au moins un processeur (62a, 62b) exécute cycliquement le code de programme initial, et **en ce que** la première partie de code modifiée (61a) est exécutée à la place de la première partie de code initiale (46a) après l'achèvement d'un cycle de programme.

7. Procédé selon l'une des revendications 1 à 6, **caractérisé en ce que** la commande de sécurité (24) possède un indicateur optique (70) avec lequel est signalée l'exécution de la première partie de code modifiée (61a).

8. Procédé selon l'une des revendications 1 à 7, **caractérisé en ce que** la première partie de programme modifiée (61a) est compilée et attachée conjointement avec l'au moins une partie de programme supplémentaire (48) en vue d'obtenir un code de programme exécutable modifié, et **en ce que** le code de programme exécutable modifié est transmis dans la première mémoire (56) après que l'exécution du code de programme initial ait été arrêtée.

9. Procédé selon l'une des revendications 1 à 8, **caractérisé en ce que** la première partie de programme modifiée est compilée deux fois en vue de générer une première partie de code modifiée (61a) et une deuxième partie de code modifiée (61b), la première partie de code modifiée et la deuxième partie de code modifiée étant transmises dans la deuxième mémoire (58) et étant exécutées de manière redondante à l'aide de l'au moins un processeur (62a, 62b).

10. Procédé selon l'une des revendications 1 à 9, **caractérisé en ce que** la commande de sécurité (24) est une commande de sécurité distribuée comprenant une pluralité d'unités de commande (28, 28', 28", 28''') connectées en réseau, sur lesquelles est respectivement exécuté un code de programme individuel, la première partie de code modifiée étant transmise à au moins deux unités de commande différentes pendant que le code de programme initial est exécuté.

11. Procédé selon l'une des revendications 1 à 10, **caractérisé en ce que** la modification de la première partie de programme (45) est autorisée ou bloquée en fonction d'une identification d'utilisateur (68).

12. Procédé selon l'une des revendications 1 à 11, **caractérisé en ce que** la transmission de la première partie de code modifiée (61a) à la deuxième mémoire (58) est consignée dans une mémoire supplémentaire (72) conjointement avec un horodatage.

13. Commande de sécurité destinée à la commande avec sécurité intégrée d'un processus dont la sécurité est critique, comprenant une pluralité d'entrées destinées à accueillir des signaux de capteur, comprenant une pluralité de sorties destinées à délivrer des signaux d'actionneur, comprenant au moins un processeur (62a, 62b) destiné à exécuter cycliquement un code de programme, comprenant une première mémoire (56) non volatile, comprenant une deuxième mémoire (58) volatile, et comprenant un outil de programmation (36) destiné à créer un programme d'utilisateur qui définit des dépendances logiques entre des signaux de capteur choisis et des signaux d'actionneur choisis,
l'outil de programmation (36) possédant un éditeur de programme (42) qui est conçu pour générer une première partie de programme et au moins une partie de programme supplémentaire, la première partie de programme définissant des dépendances logiques relatives à la sécurité entre certains signaux de capteur et signaux d'actionneur choisis, l'outil de programmation (36) possédant en outre un compilateur (44) qui est conçu pour compiler la première et l'au moins une partie de programme supplémentaire et pour les attacher à un code de programme initial exécutable pour l'au moins un processeur (62a, 62b), le code de programme initial possédant une première partie de code initiale (46a), qui représente la première partie de programme, et au moins une partie de code supplémentaire initiale (48) qui représente l'au moins une partie de programme supplémentaire,
l'outil de programmation (36) possédant une interface (54) servant à la transmission du code de programme initial dans la première mémoire,
**caractérisée en ce que** l'outil de programmation (36) est configuré pour modifier et compiler la première partie de programme séparément de la partie de programme supplémentaire en vue d'obtenir une première partie de code modifiée, et **en ce que** l'outil de programmation (36) possède une interface supplémentaire (60) qui est conçue pour transmettre la première partie de code modifiée dans la deuxième mémoire (58) pendant que le code de programme initial est exécuté à l'aide de l'au moins un processeur (62a, 62b), la commande de sécurité (24) étant configurée pour exécuter, à l'aide de l'au moins un processeur (62a, 62b), la première partie de code modifiée en complément de la partie de code supplémentaire initiale et à la place de la première partie de code initiale en vue de générer les signaux d'actionneur en fonction de la première partie de programme modifiée.

14. Programme informatique pour une commande de sécurité destinée à la commande avec sécurité intégrée d'un processus dont la sécurité est critique, la commande de sécurité comprenant une pluralité d'entrées destinées à accueillir des signaux de capteur, une pluralité de sorties destinées à délivrer des signaux d'actionneur, au moins un processeur destiné à exécuter cycliquement un code de programme, une première mémoire non volatile, une deuxième mémoire volatile, et un outil de programmation destiné à créer un programme d'utilisateur qui définit des dépendances logiques entre des signaux de capteur choisis et des signaux d'actionneur choisis, le programme informatique étant conçu pour exécuter un procédé selon l'une des revendications 1 à 12 lorsque le programme informatique est mis en oeuvre sur la commande de sécurité.
